# EUROPÄISCHE PATENTSCHRIFT

(11) **EP 3 360 121 B1**
(45) Veröffentlichungstag und Bekanntmachung des Hinweises auf die Patenterteilung: **12.01.2022**
(21) Anmeldenummer: 16722603.4
(22) Anmeldetag: 04.05.2016
(51) Int. Cl.: G08G 1/14, B60L 1/00, G07B 15/00, G07B 15/02

(54) **PARKPLATZÜBERWACHUNGSSYSTEM**
CAR PARK MONITORING SYSTEM
SYSTÈME DE SURVEILLANCE DE PLACES DE STATIONNEMENT

(30) Priorität: 09.11.2015 WO PCT/EP2015/076085
(43) Veröffentlichungstag der Anmeldung: 15.08.2018
(73) Patentinhaber: Cleverciti Systems GmbH, 81379 München (DE)
(72) Erfinder: HOHENACKER, Thomas, 82319 Starnberg (DE)
(74) Vertreter: Manitz Finsterwald Patent- und Rechtsanwaltspartnerschaft mbB
(86) Internationale Anmeldenummer: PCT/EP2016/060040
(87) Internationale Veröffentlichungsnummer: WO 2017/080684

(56) Entgegenhaltungen:
- WO-A1-2013/139454
- DE-A1- 4 401 993
- US-A1- 2014 335 897

## Beschreibung

Die vorliegende Erfindung betrifft ein Parkplatzüberwachungssystem zur Erfassung von freien und besetzten Parkplatzbereichen in einer Parkplatzfläche, mit einer Erkennungseinheit und einem Kamerasystem, wobei das Kamerasystem zum Liefern von Abbildindizien von innerhalb der Parkplatzfläche ausgebildet ist, und die Erkennungseinheit ausgebildet ist, in Abhängigkeit der Abbildindizien den Parkplatzbereichen je einen Belegungsstatus zuzuordnen, der kennzeichnet, ob ein jeweiliger Parkplatzbereich frei oder besetzt ist. Parkplatzüberwachungssysteme, welche Parkplatzflächen insbesondere mittels Kameras überwachen und einen Belegungsstatus der Parkplatzbereiche ausgeben, sind grundsätzlich bekannt, z.B. aus der WO 2013/139454 A1 oder der US 2014/0335897 A1. Überdies ist ein Parkplatzüberwachungssystem mit den Merkmalen des Oberbegriffs des Anspruchs 1 aus der DE 44 01 993 A1 bekannt. Nachteiligerweise ist es allein anhand eines Belegungsstatus nur sehr schwer möglich, ein unbezahltes Parken oder ein widerrechtliches Parken nachzuweisen.

Es ist daher die der Erfindung zugrundeliegende Aufgabe, ein Parkplatzüberwachungssystem anzugeben, welches geeignet ist, einen juristisch verwertbaren Nachweis von unberechtigten oder unbezahlten Parkvorgängen durchzuführen. Diese Aufgabe wird gemäß der Erfindung durch ein Parkplatzüberwachungssystem nach Anspruch 1 gelöst.

Die Erkennungseinheit ist dazu ausgebildet ist, die Abbildindizien für zumindest einen jeweiligen Parkplatzbereich dann als eine erste Momentaufnahme zu speichern, wenn sich der Belegungsstatus des jeweiligen Parkplatzbereichs von frei auf besetzt ändert und die Abbildindizien für zumindest den jeweiligen Parkplatzbereich zusätzlich dann als eine zweite Momentaufnahme zu speichern, wenn eine Randbedingung erfüllt ist.

Anders ausgedrückt kann in etwa beim Beginn eines Parkvorgangs die erste Momentaufnahme (z.B. des Fahrzeugs) angefertigt und gespeichert werden, um den Beginn des Parkvorgangs zu dokumentieren. Ist später die Randbedingung erfüllt, die beispielsweise angeben kann, dass die Höchstparkdauer überschritten wurde, so wird die zweite Momentaufnahme angefertigt und gespeichert. Die Randbedingung kann dabei einen einzelnen Parkplatzbereich aber auch mehrere Parkplatzbereich gleichzeitig betreffen. Anhand der beiden Momentaufnahmen kann dann nachgewiesen werden, dass das Fahrzeug länger als die erlaubte Höchstparkdauer auf einem Parkplatzbereich geparkt war. Hierdurch kann ein juristisch verwertbarer Beweis erbracht werden.

Ein besonderer Vorteil der Speicherung von Momentaufnahmen ist es, dass die Momentaufnahmen jeweils wichtige Zeitpunkte eines Parkvorgangs zeigen (den Beginn und den Moment der Überschreitung der Höchstparkdauer) und somit nur wenige Momentaufnahmen gespeichert werden müssen, die dementsprechend wenig Speicherplatz benötigen. Insbesondere werden von Fahrzeugen keine zweiten Momentaufnahmen angefertigt, wenn diese die Randbedingung nicht erfüllen und beispielsweise die Höchstparkdauer nicht überschreiten.

Bei den Abbildindizien kann es sich um Kamerabilder, d.h. Einzelbilder, handeln. Die vom Kamerasystem an die Erkennungseinheit gelieferten Abbildindizien der Parkplatzbereiche können beispielsweise Bildaufnahmen der kompletten Parkplatzbereiche oder aber auch Bilder von Teilbereichen der Parkplatzbereiche sein.

Die Abbildindizien müssen lediglich einen Parkplatzbereich in solch einer Weise repräsentieren, dass die Erkennungseinheit anhand der Abbildindizien den Parkplatzbereichen einen Belegungsstatus zuordnen kann, der kennzeichnet, ob ein jeweiliger Parkplatzbereich frei oder besetzt ist. Die Momentaufnahmen basieren auf den Abbildindizien und können insbesondere Teilbereiche oder Ausschnitte der Abbildindizien sein. Bevorzugt sind die Momentaufnahmen so gewählt, dass eine Momentaufnahme jeweils nur ein Fahrzeug vollständig zeigt.

Eine Parkplatzfläche bezeichnet einen Flächenbereich, in welchem sich mehrere Parkplatzbereiche befinden, beispielsweise entlang einer Straße. Ein Parkplatzbereich kann auch als einzelner Stellplatz bezeichnet werden, das heißt ein Parkplatzbereich bietet üblicherweise einem Fahrzeug Platz. Die Parkplatzbereiche können unterschiedliche Größen aufweisen und so beispielsweise an die Größe von PKWs, LKWs oder Fahrrädern angepasst sein.

Die Parkplatzbereiche innerhalb der Parkplatzfläche können beispielsweise einmalig festgelegt werden. Alternativ können die Parkplatzbereiche auch anhand der Position von Fahrzeugen erkannt werden. Insbesondere ist es nicht erforderlich, dass die Parkplatzbereiche durch Linien und dergleichen markiert sind. Zusätzlich können auch Bereiche festgelegt oder ermittelt werden, in welchen ein Parken grundsätzlich unerwünscht oder verboten ist (Verbotszonen). Solche Bereiche können z.B. eine Straße oder eine Feuerwehranfahrtszone sein.

Bei den Fahrzeugen kann es sich um PKWs, LKWs, Motorräder, Fahrräder, Anhänger und dergleichen handeln. Ebenfalls ist es möglich, dass es sich bei den Fahrzeugen um Schiffe oder Flugzeuge handelt. In diesem Fall können die Parkplatzbereiche Anlegestellen eines Hafens oder Parkpositionen auf einem Flughafen sein.

Vorteilhafte Weiterbildungen der Erfindung sind der Beschreibung, den Zeichnungen sowie den Unteransprüchen zu entnehmen.

Gemäß einer ersten vorteilhaften Ausführungsform betreffen die Momentaufnahmen im Wesentlichen nur den jeweiligen Parkplatzbereich. Dies bedeutet, die Momentaufnahme kann zumindest im Wesentlichen nur einen einzigen Parkplatzbereich zeigen. Auf diese Weise können strikte Datenschutzvorgaben eingehalten werden, da beim Überschreiten der Höchstparkdauer auf einem Parkplatzbereich, das Geschehen auf den umliegenden Parkplatzbereichen nicht gespeichert wird.

Gemäß einer weiteren vorteilhaften Ausführungsform ist die Erkennungseinheit ausgebildet, die Momentaufnahmen nur bei Eintreten der Randbedingung auszugeben, insbesondere an ein Anzeigegerät. Die Momentaufnahmen können vor der Ausgabe bevorzugt nur in der Erkennungseinheit gespeichert sein, wodurch wiederum hohe Datenschutzanforderungen erfüllt werden können. Bei dem Anzeigegerät kann es sich insbesondere um ein mobiles Anzeigegerät für Parküberwachungspersonal handeln. Aufgrund der Ausgabe lediglich von Momentaufnahmen und auch erst dann, wenn die Randbedingung erfüllt ist, kann ein zu übertragendes Datenvolumen stark reduziert werden.

Gemäß einer weiteren vorteilhaften Ausführungsform ist die Erkennungseinheit ausgebildet, die Momentaufnahmen zu löschen, wenn sich der Belegungsstatus eines jeweiligen Parkplatzbereichs vor dem Eintreten der Randbedingung von besetzt auf frei ändert. Hierdurch kann ebenfalls sichergestellt werden, dass Fahrzeuge bzw. Personen, die die Höchstparkdauer nicht überschreiten, nicht dauerhaft mittels der Momentaufnahmen gespeichert bleiben. Zudem werden durch das Löschen der Momentaufnahmen die Anforderungen an die Speicherkapazität der Erkennungseinheit reduziert.

Bei der Erkennungseinheit kann es sich um ein lokales Gateway (d.h. einen lokalen Rechner) handeln, der mit dem Kamerasystem kommuniziert. Insbesondere kann das Kamerasystem auch mehrere verteilt angeordnete Kameras aufweisen, die mit der Erkennungseinheit verbunden sind. Alternativ kann die Erkennungseinheit auch in eine der Kameras integriert sein und bevorzugt als ein Embedded-System ausgelegt sein.

Besonders bevorzugt werden vor dem Eintreten der Randbedingung die Momentaufnahmen ausschließlich in der Erkennungseinheit gespeichert. Hierdurch kann wiederum Datenverkehr eingespart werden, da die Momentaufnahmen erst mit dem Eintreten der Randbedingung von der Erkennungseinheit ausgegeben werden.

Alternativ kann die Erkennungseinheit ausgebildet sein, zumindest die erste Momentaufnahme vor dem Eintreten der Randbedingung auszugeben und für die Durchführung eines Bezahlvorgangs zur Verfügung zu stellen. Die erste Momentaufnahme kann dem Fahrer desjenigen Fahrzeugs angezeigt werden, das auf der ersten Momentaufnahme dargestellt ist. Der Fahrer kann dann beim Bezahlen seines Parkvorgangs bestätigen, dass er für das in der ersten Momentaufnahme gezeigte Fahrzeug bezahlen möchte, beispielsweise durch Berühren des Fahrzeugs auf einem Bildschirm. Durch das Bestätigen kann eine Verknüpfung zwischen dem Bezahlvorgang, dem jeweiligen Fahrzeug, der Momentaufnahme und einer Position des Fahrzeugs geschaffen werden. Zusätzlich zu der ersten Momentaufnahme kann dem Fahrer auch eine Karte angezeigt werden, die die Position seines Fahrzeugs anzeigt. Hierdurch kann es dem Fahrer erleichtert werden, zu seinem Fahrzeug zu gelangen.

Anstelle der ersten Momentaufnahme oder zusätzlich zu der ersten Momentaufnahme können auch weitere Momentaufnahmen von der Erkennungseinheit für die Durchführung eines Bezahlvorgangs zur Verfügung gestellt werden. Die Momentaufnahmen können insbesondere an einen Parkautomaten (d.h. einen Kassenautomaten) oder an eine App eines Smartphones übertragen werden, wobei die App die Bezahlung von Parkgebühren gestattet.

Erfindungsgemäß umfasst die Randbedingung eine maximale Parkdauer. Hierzu kann die Erkennungseinheit beispielsweise mit einem Parkautomat zur Gebührenzahlung gekoppelt sein. Der Parkautomat kann der Erkennungseinheit jeweils mitteilen, wann die Höchstparkdauer (d.h. die maximale Parkdauer) für einen jeweiligen Parkplatzbereich erreicht ist.

Zur Zuordnung der maximalen Parkdauer zu einem bestimmten Parkplatzbereich kann der Parkautomat ausgebildet sein, den von einem Fahrzeug verwendeten Parkplatzbereich (z.B. "Abschnitt B, Stellplatz 4") bei der Gebührenzahlung abzufragen. Alternativ oder zusätzlich kann bei der Gebührenzahlung auch ein Nummernschild des jeweiligen Fahrzeugs abgefragt werden. Generell kann die Gebührenzahlung an ein Nummernschild (d.h. an ein Fahrzeug) gekoppelt erfolgen, beispielsweise auch mittels einer App auf einem Smartphone. Anhand der Gebührenzahlung kann dann eine maximale Parkdauer (d.h. die Höchstparkdauer) für den jeweiligen Parkplatzbereich ermittelt werden.

Bevorzugt kann das Parkplatzüberwachungssystem eine Nummernschild-Erkennungseinheit umfassen. Die Nummernschild-Erkennungseinheit dient dazu, die Nummernschilder von Fahrzeugen zu erfassen, die die Parkplatzbereiche benutzen, und insbesondere jeweils das Nummernschild des Fahrzeugs einem jeweiligen Parkplatzbereich zuzuordnen, auf welchem das Fahrzeug parkt.

Die Nummernschild-Erkennungseinheit kann beispielsweise ein portables Gerät umfassen, in welches Parküberwachungspersonal die Nummernschilder manuell eingibt. Ebenfalls kann die Nummernschild-Erkennungseinheit eine Kamera umfassen, die insbesondere an einem Fahrzeug (einem sogenannten "Scan-Car") angebracht und damit mobil ist. Ist die Nummernschild-Erkennungseinheit mobil, so kann die Nummernschild-Erkennungseinheit eine GPS-Einheit umfassen, um den erkannten Nummernschildern eine GPS-Position und damit einen bestimmten Parkplatzbereich zuzuordnen.

Alternativ kann die Kamera auch ortsfest, z.B. an einer Einfahrt zur Parkplatzfläche oder leicht erhöht über der Parkplatzfläche angeordnet sein. Die Nummernschild-Erkennungseinheit kann ausgebildet sein, erkannte Nummernschilder jeweils Parkplatzbereichen zuzuordnen.

Insbesondere kann es sich bei der Kamera der Nummernschild-Erkennungseinheit auch um eine Kamera des Kamerasystems des Parkplatzüberwachungssystems handeln. Auf diese Weise kann eine Kamera des Kamerasystems doppelt ausgenutzt werden.

Gemäß einer weiteren vorteilhaften Ausführungsform sind die Randbedingungen für zumindest einen Teil der Parkplatzbereiche unterschiedlich. Hierdurch wird es ermöglicht, unterschiedliche Parkzonen, beispielsweise Kurzparkzonen, festzulegen. Mit dem Parkplatzüberwachungssystem können somit gleichzeitig verschiedene Arten von Parkplätzen überwacht werden.

Gemäß einer weiteren vorteilhaften Ausführungsform umfasst das Parkplatzüberwachungssystem eine Sendeeinheit und ein mobiles Anzeigegerät, wobei die Erkennungseinheit ferner ausgebildet ist, die geografischen Koordinaten von sich im Sichtbereich des Kamerasystems befindlichen Parkplatzbereichen abzuspeichern und/oder den jeweiligen Belegungsstatus zumindest der freien Parkplatzbereiche insbesondere mit den zugehörigen geografischen Koordinaten der Sendeeinheit zur Verfügung zu stellen, wobei die Sendeeinheit dazu ausgebildet ist, den jeweiligen Belegungsstatus zumindest der freien Parkplatzbereiche mit den zugehörigen geografischen Koordinaten an das mobile Anzeigegerät zu senden.

Bei dem mobilen Anzeigegerät kann es sich um das vorgenannte Anzeigegerät handeln. Bevorzugt werden von der Sendeeinheit auch der Belegungsstatus von besetzten Parkplatzbereichen und insbesondere auch die Momentaufnahmen an das Anzeigegerät übertragen.

Es können also innerhalb jeder von einem Kamerasystem überwachten Parkplatzfläche freie Parkplatzbereiche dynamisch ermittelt werden. Um das Parkplatzüberwachungssystem zu realisieren, wirken bevorzugt zumindest ein Kamerasystem, zumindest eine Erkennungseinheit, zumindest eine Sendeeinheit und zumindest ein Anzeigegerät zusammen. Das Kamerasystem ist dabei insbesondere an einer Straßenbeleuchtungseinrichtung montiert, wodurch auf vorteilhafte Weise erreicht wird, dass für die Montage keine Erlaubnis von privaten Gebäudebesitzern eingeholt werden muss. Zudem kann bei Bedarf die Energiequelle der Straßenbeleuchtungseinrichtung die Energieversorgung des Kamerasystems und damit verbundener Komponenten ermöglichen, alternativ ist aber auch ein Akkuoder Batteriebetrieb möglich. Das Kamerasystem kann so montiert und ausgerichtet sein, dass es bevorzugt jeweils mehrere Parkplatzbereiche einer Parkplatzfläche erfassen kann.

Bevorzugt ist die Erkennungseinheit ausgebildet, nach dem Eintreten der Randbedingung weitere Momentaufnahmen des jeweiligen Parkplatzbereichs anzufertigen, insbesondere in vorbestimmten Zeitabständen. Dies bedeutet, es können weitere Momentaufnahmen beispielsweise zumindest alle fünf oder alle zwei Minuten angefertigt werden. Auf diese Weise kann genau dokumentiert werden, wann ein Parkvorgang nach Überschreiten der Höchstparkdauer tatsächlich beendet wurde.

Gemäß einer weiteren vorteilhaften Ausführungsform werden auch schon nach der ersten Momentaufnahme in vorbestimmten Zeitabständen weitere Momentaufnahmen angefertigt. Durch diese Momentaufnahmen, die zeitlich zwischen der ersten Momentaufnahme und der zweiten Momentaufnahme angefertigt und gespeichert werden, kann zusätzlich nachgewiesen werden, dass ein Fahrzeug dauerhaft in einem Parkplatzbereich geparkt war und den Parkplatzbereich nicht kurzzeitig verlassen hat.

Erfindungsgemäß werden nach dem Eintreten der Randbedingung die erste Momentaufnahme sowie die zweite Momentaufnahme auf einem Anzeigegerät dargestellt. Gemäß einer vorteilhaften Weiterbildung kann nach dem Eintreten der Randbedingung zusätzlich zu der ersten Momentaufnahme sowie der zweiten Momentaufnahme zumindest eine der weiteren Momentaufnahmen auf dem Anzeigegerät dargestellt werden, insbesondere nebeneinander.

Bevorzugt werden dabei die erste Momentaufnahme und diejenige Momentaufnahme, die zeitlich zuletzt angefertigt wurde, auf dem Anzeigegerät dargestellt. Hierdurch kann beispielsweise der Beginn und das Ende eines Parkvorgangs visualisiert werden. Durch die Darstellung nebeneinander ist zudem ohne weiteres erkenntlich, ob sich ein Fahrzeug während des Parkvorgangs bewegt hat oder nicht. Kann keine Bewegung (d.h. keine Veränderung der Position des Fahrzeugs) festgestellt werden, so ist wiederum ein eindeutiger Beweis erbracht, dass die Höchstparkdauer überschritten wurde.

Erfindungsgemäß gibt das Anzeigegerät neben den Momentaufnahmen weitere Informationen betreffend den jeweiligen Parkplatzbereich wieder, nämlich eine Ankunftszeit, eine Parkdauer oder eine Karte, in welcher der jeweilige Parkplatzbereich markiert ist. Aufgrund der zusätzlichen Informationen kann beispielsweise Parküberwachungspersonal feststellen, ob tatsächlich eine Überschreitung der Höchstparkdauer bzw. eine Überschreitung der bezahlten Parkdauer vorliegt. Anhand der Anzeige des Parkplatzbereichs auf einer Karte kann das Parküberwachungspersonal zudem auf einfache Weise zu dem jeweiligen Fahrzeug bzw. zu dem jeweiligen Parkplatzbereich geleitet werden.

Neben den genannten zusätzlichen Informationen gibt das Anzeigegerät auch einen Vergleichswert an, der mittels eines Bildvergleichs von dem Anzeigegerät oder der Erkennungseinheit berechnet wird. Der Vergleichswert gibt erfindungsgemäß an, wie stark sich die Positionen des Fahrzeugs in den jeweiligen Momentaufnahmen ähneln. Übersteigt der Vergleichswert einen vorbestimmten Grenzwert, so kann davon ausgegangen werden, dass sich das Fahrzeug nicht bewegt hat und somit dauerhaft auf dem Parkplatzbereich geparkt war. Der Vergleichswert kann in der Folge eine automatische Veranlassung von Bußgeldern und dergleichen gestatten.

Weiter bevorzugt umfassen die Momentaufnahmen jeweils eine GPS-Position und/oder eine Uhrzeit. Die GPS-Position kann die Position eines oder mehrerer Pixel der Momentaufnahme angeben. In die Momentaufnahmen können also eine jeweilige Position und/oder die Uhrzeit eingeblendet sein, zu welcher die Momentaufnahme angefertigt wurde. Anhand des Vergleichs der Uhrzeit zwischen verschiedenen Momentaufnahmen kann somit auch ermittelt werden, wie lange ein Fahrzeug in einem jeweiligen Parkplatzbereich geparkt hat.

Um den Momentaufnahmen eine GPS-Position zuweisen zu können, ist das Parkplatzüberwachungssystem bevorzugt ausgebildet, den Abbildindizien eine GPS-Position zuzuweisen. Insbesondere kann für jeden Pixel eines Bilds der Abbildindizien eine GPS-Position bekannt sein und gespeichert werden. Die Momentaufnahmen können dann vorteilhafterweise anhand der GPS-Position aus den Abbildindizien ausgeschnitten bzw. erzeugt werden.

Gemäß einer weiteren vorteilhaften Ausführungsform umfassen die Momentaufnahmen jeweils Bildausschnitte, welche insbesondere in Grauwerten dargestellt sind. Aufgrund der Darstellung in Grauwerten kann eine weitere Reduktion der zu übertragenden bzw. zu speichernden Daten erfolgen.

Gemäß einer weiteren vorteilhaften Ausführungsform umfassen die Momentaufnahmen jeweils Kanten- oder Konturbilder. Bei der Verwendung von Kanten- oder Konturbildern sind lediglich die Umrisse eines Fahrzeugs zu erkennen, wodurch auch die bereits erwähnten strengen Datenschutzvorgaben für den öffentlichen Raum eingehalten werden können. Die Kanten- oder Konturbilder können beispielsweise durch einen Kantenfilter-Algorithmus, wie den Sobel-Algorithmus, aus den Abbildindizien erzeugt werden. Die Kanten- oder Konturbilder gestatten es ein Fahrzeug allein anhand seiner Umrisse zu erkennen und ermöglichen es auch, eine eventuelle Bewegung des Fahrzeugs zwischen zwei Momentaufnahmen festzustellen.

Anders ausgedrückt kann die Erkennungseinheit zudem ausgelegt sein, Kantenbilder oder Konturbilder von von dem Kamerasystem erfassten (Kraft-)Fahrzeugen auszugeben. Die Kanten- oder Konturbilder können eine schwarz-weiße Darstellung eines Ausschnitts des Kamerabilds bzw. der Abbildindizien sein, wobei die Kanten- oder Konturbilder insbesondere dann ausgegeben werden, wenn eine Höchstparkdauer von einem Fahrzeug überschritten wurde. Die Kanten- oder Konturbilder können das Fahrzeug zu Beginn des Parkvorgangs und nach dem Erreichen der Höchstparkdauer zeigen, wobei die Kanten- oder Konturbilder z.B. direkt an Überwachungspersonal übermittelt werden können. Die Kanten- oder Konturbilder können Zeit- und/oder Positionsinformationen (GPS-Informationen) umfassen.

Aufgrund der ausgegebenen Kanten- oder Konturbilder kann z.B. dem Überwachungspersonal ein Überschreiten der Höchstparkdauer angezeigt werden. Durch einen Vergleich der Bilder zu Beginn des Parkvorgangs mit den Bildern nach dem Erreichen der Höchstparkdauer, kann zudem festgestellt werden, ob sich das Fahrzeug während des Parkvorgangs bewegt hat. Kann keine Bewegung festgestellt werden, ist ein juristisch verwertbarer Beweis der Überschreitung der Höchstparkdauer erbracht. Die Höchstparkdauer für einen jeweiligen Parkplatzbereich kann in der Erkennungseinheit gespeichert sein.

Sind beispielsweise die Kanten- oder Konturbilder zum Nachweis des Überschreitens der Höchstparkdauer nicht ausreichend, so können zusätzlich auch die Momentaufnahmen in Grauwerten ausgegeben werden.

Weiterer Gegenstand der Erfindung ist ein Verfahren gemäß Anspruch 13. Zu dem erfindungsgemäßen Verfahren gelten die Ausführungen zu dem erfindungsgemäßen Parkplatzüberwachungssystem entsprechend, insbesondere hinsichtlich Vorteilen und bevorzugten Ausführungsformen.

Nachfolgend wird die Erfindung rein beispielhaft unter Bezugnahme auf die Zeichnungen beschrieben. Es zeigen:
- Fig. 1: ein Parkplatzüberwachungssystem in schematischer Ansicht;
- Fig. 2: ein mobiles Anzeigegerät, welches Momentaufnahmen in Form von Konturbildern darstellt; und
- Fig. 3: ein mobiles Anzeigegerät, welches Momentaufnahmen in Form von Grauwertbildern darstellt.

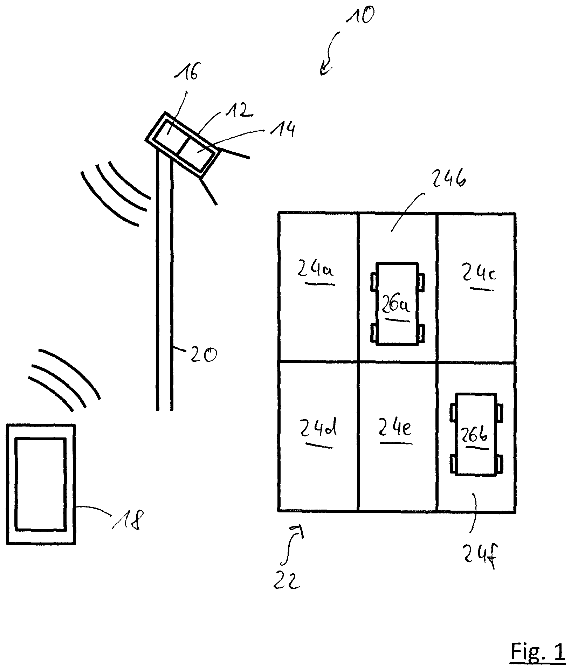

Fig. 1 zeigt ein Parkplatzüberwachungssystem 10, welches eine Kamera 12 umfasst. In die Kamera 12 sind eine Erkennungseinheit 14 sowie eine Sendeeinheit 16 integriert. Die Sendeeinheit 16 kommuniziert mittels Funk mit einer mobilen Anzeigeeinheit 18 in Form eines Smartphones.

Die Kamera 12 ist an einem Masten 20 erhöht über einer Parkplatzfläche 22 angebracht. Die Parkplatzfläche 22 umfasst mehrere Parkplatzbereiche 24a, 24b, 24c, 24d, 24e, 24f.

Auf zweien der Parkplatzbereiche 24 sind jeweils Fahrzeuge 26a, 26b geparkt.

Die Kamera 12 überwacht die Parkplatzbereiche 24 der Parkplatzfläche 22, wobei die Erkennungseinheit 14 für jeden der Parkplatzbereiche 24 einen Belegungsstatus ausgibt, der kennzeichnet, ob ein jeweiliger Parkplatzbereich 24 frei oder besetzt ist. Hierzu fertigt die Kamera 12 Abbildindizien in Form von Einzelbildern an.

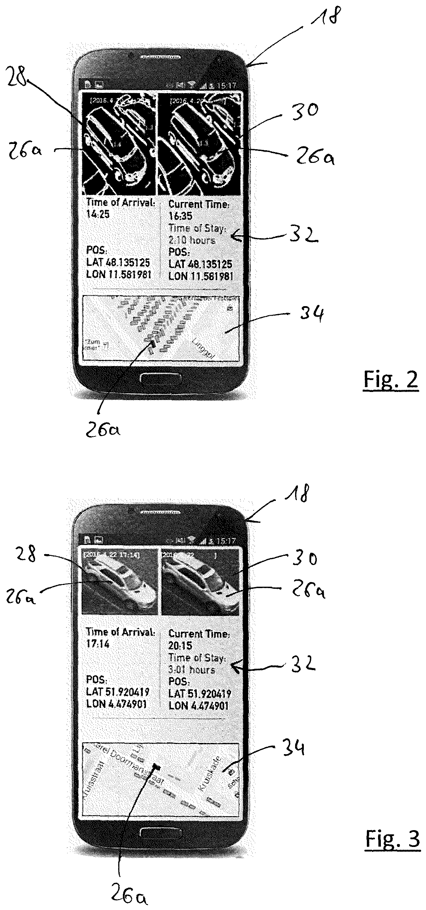

In dem in Fig. 1 gezeigten Beispiel wird beim Eintreffen des Fahrzeugs 26a auf dem Parkplatzbereich 24b eine erste Momentaufnahme 28 angefertigt und zunächst nur in der Erkennungseinheit 14 gespeichert. Die erste Momentaufnahme 28 ist beispielsweise in Fig. 2 dargestellt und zeigt nur das Fahrzeug 26a vollständig.

Eine Höchstparkdauer für jeden der Parkplatzbereiche 24 kann beispielsweise zwei Stunden betragen.

Wird von dem Fahrzeug 26a die Höchstparkdauer für den Parkplatzbereich 24b überschritten, so wird eine zweite Momentaufnahme 30 von der Erkennungseinheit 14 angefertigt und gespeichert. Die Momentaufnahmen 28, 30 sind jeweils ein Bildausschnitt, der als Konturbild dargestellt ist. Nach dem Überschreiten der Höchstparkdauer werden die Momentaufnahmen 28, 30 an die mobile Anzeigeeinheit 18 übermittelt und wie in Fig. 2 gezeigt dargestellt.

Die mobile Anzeigeeinheit 18 (Fig. 2) zeigt die Momentaufnahmen 28, 30 nebeneinander an und stellt unterhalb der Momentaufnahmen 28, 30 Zusatzinformationen 32 und eine Karte 34 dar. Die Zusatzinformationen geben insbesondere eine Ankunftszeit ("Time of Arrival"), eine momentane Zeit ("Current Time"), eine Parkdauer ("Time of Stay") sowie eine GPS-Position ("POS") des Fahrzeugs 26a beim Eintreffen auf der Parkplatzfläche 24b sowie eine GPS-Position ("POS") bei der Aufnahme der zweiten Momentaufnahme 30 an. Anhand eines Vergleichs der Momentaufnahmen 28, 30 und der GPS-Positionen kann ohne weiteres festgestellt werden, ob sich das Fahrzeug 26a während seines Parkvorgangs bewegt hat.

Generell kann also aufgrund der Momentaufnahmen 28, 30 und der Zusatzinformationen 32 juristisch einwandfrei nachgewiesen werden, dass eine Überschreitung der Höchstparkdauer vorgelegen hat. Anhand der Karte 34 kann Parküberwachungspersonal das Fahrzeug 26a, welches in der Karte 34 eingezeichnet ist, zudem schnell auffinden.

In Fig. 3 ist eine weitere mobile Anzeigeeinheit 18 dargestellt. Im Unterschied zu der mobilen Anzeigeeinheit 18 von Fig. 2 werden in Fig. 3 keine Konturbilder sondern Grauwertbilder als Momentaufnahmen 28, 30 angezeigt.

### Bezugszeichenliste

- 10: Parkplatzüberwachungssystem
- 12: Kamera
- 14: Erkennungseinheit
- 16: Sendeeinheit
- 18: mobile Anzeigeeinheit
- 20: Mast
- 22: Parkplatzfläche
- 24: Parkplatzbereiche
- 26: Fahrzeuge
- 28: erste Momentaufnahme
- 30: zweite Momentaufnahme
- 32: Zusatzinformationen
- 34: Karte

## Patentansprüche

1. Parkplatzüberwachungssystem (10) zur Erfassung von freien und besetzten Parkplatzbereichen (24) in einer Parkplatzfläche (22), mit einer Erkennungseinheit (14) und einem Kamerasystem (12), wobei das Kamerasystem (12) zum Liefern von Abbildindizien von innerhalb der Parkplatzfläche (22) ausgebildet ist, und die Erkennungseinheit (14) ausgebildet ist, in Abhängigkeit der Abbildindizien den Parkplatzbereichen (24) je einen Belegungsstatus zuzuordnen, der kennzeichnet, ob ein jeweiliger Parkplatzbereich (24) frei oder besetzt ist,
wobei die Erkennungseinheit (14) ferner ausgebildet ist, die Abbildindizien für zumindest einen jeweiligen Parkplatzbereich (24) dann als eine erste Momentaufnahme (28) zu speichern, wenn sich der Belegungsstatus des jeweiligen Parkplatzbereichs (24) von frei auf besetzt ändert und zusätzlich dann als eine zweite Momentaufnahme (30) zu speichern, wenn eine Randbedingung erfüllt ist,
**dadurch gekennzeichnet, dass**
die Randbedingung eine maximale Parkdauer umfasst,
wobei das Parkplatzüberwachungssystem (10) ausgebildet ist, nach dem Eintreten der Randbedingung die erste Momentaufnahme (28) sowie die zweite Momentaufnahme (30) auf einem Anzeigegerät (18) darzustellen, und
wobei das Anzeigegerät (18) ausgebildet ist, weitere Informationen betreffend den jeweiligen Parkplatzbereich (24), nämlich eine Ankunftszeit, eine Parkdauer oder eine Karte, in welcher der jeweilige Parkplatzbereich (24) markiert ist, wiederzugeben und das Parkplatzüberwachungssystem ausgebildet ist, einen mittels eines Bildvergleichs durch Berechnung von dem Anzeigegerät (18) oder der Erkennungseinheit (14) erhaltenen Vergleichswert auf dem Anzeigegerät anzugeben, welcher angibt, wie stark sich die Positionen eines Fahrzeugs in den Momentaufnahmen (28, 30) ähneln.

2. Parkplatzüberwachungssystem (10) nach Anspruch 1,
**dadurch gekennzeichnet, dass**
die Momentaufnahmen (28, 30) im Wesentlichen nur den jeweiligen Parkplatzbereich (24) betreffen.

3. Parkplatzüberwachungssystem (10) nach Anspruch 1 oder 2,
**dadurch gekennzeichnet, dass**
die Erkennungseinheit (14) ausgebildet ist, die Momentaufnahmen (28, 30) nur bei Eintreten der Randbedingung auszugeben, insbesondere an ein Anzeigegerät (18).

4. Parkplatzüberwachungssystem (10) nach zumindest einem der vorstehenden Ansprüche,
**dadurch gekennzeichnet, dass**
die Erkennungseinheit (14) ausgebildet ist, die Momentaufnahmen (28, 30) zu löschen, wenn sich der Belegungsstatus eines jeweiligen Parkplatzbereichs (24) vor dem Eintreten der Randbedingung von besetzt auf frei ändert.

5. Parkplatzüberwachungssystem (10) nach zumindest einem der vorstehenden Ansprüche,
**dadurch gekennzeichnet, dass**
vordem Eintreten der Randbedingung die Momentaufnahmen (28, 30) ausschließlich in der Erkennungseinheit (14) gespeichert werden.

6. Parkplatzüberwachungssystem (10) nach einem der Ansprüche 1 bis 4,
**dadurch gekennzeichnet, dass**
die Erkennungseinheit (14) ausgebildet ist, zumindest die erste Momentaufnahme (28) vor dem Eintreten der Randbedingung auszugeben und für die Durchführung eines Bezahlvorgangs zur Verfügung zu stellen

7. Parkplatzüberwachungssystem (10) nach zumindest einem der vorstehenden Ansprüche,
**gekennzeichnet durch**
eine Nummernschild-Erkennungseinheit, die dazu dient, die Nummernschilder von Fahrzeugen (26) zu erfassen, die die Parkplatzbereiche (24) benutzen und insbesondere jeweils das Nummernschild des Fahrzeugs (26) einem jeweiligen Parkplatzbereich (24) zuzuordnen, auf welchem das Fahrzeug (26) parkt.

8. Parkplatzüberwachungssystem (10) nach zumindest einem der vorstehenden Ansprüche,
**dadurch gekennzeichnet, dass**
die Randbedingungen für zumindest einen Teil der Parkplatzbereiche (24) unterschiedlich sind.

9. Parkplatzüberwachungssystem (10) nach zumindest einem der vorstehenden Ansprüche,
**gekennzeichnet durch**
eine Sendeeinheit (16) und ein mobiles Anzeigegerät (18), wobei die Erkennungseinheit (14) ferner ausgebildet ist,
- die geografischen Koordinaten von sich im Sichtbereich des Kamerasystems (12) befindlichen Parkplatzbereichen (24) abzuspeichern,
- den jeweiligen Belegungsstatus zumindest der freien Parkplatzbereiche (24) mit den zugehörigen geografischen Koordinaten der Sendeeinheit (16) zur Verfügung zu stellen,
wobei die Sendeeinheit (16) dazu ausgebildet ist, den jeweiligen Belegungsstatus zumindest der freien Parkplatzbereiche (24) mit den zugehörigen geografischen Koordinaten an das mobile Anzeigegerät (18) zu senden.

10. Parkplatzüberwachungssystem (10) nach zumindest einem der vorstehenden Ansprüche,
**dadurch gekennzeichnet, dass**
die Erkennungseinheit (14) ausgebildet ist, nach dem Eintreten der Randbedingung weitere Momentaufnahmen des jeweiligen Parkplatzbereichs (24) anzufertigen, insbesondere in vorbestimmten Zeitabständen.

11. Parkplatzüberwachungssystem (10) nach Anspruch 10,
**dadurch gekennzeichnet, dass**
nach dem Eintreten der Randbedingung die erste Momentaufnahme (28) sowie die zweite Momentaufnahme (30) und zumindest eine der weiteren Momentaufnahmen auf einem Anzeigegerät (18) dargestellt werden, insbesondere nebeneinander.

12. Parkplatzüberwachungssystem (10) nach zumindest einem der vorstehenden Ansprüche,
**dadurch gekennzeichnet, dass**
die Momentaufnahmen (28, 30) jeweils Kanten- oder Konturbilder umfassen.

13. Verfahren zur Erfassung von freien und besetzten Parkplatzbereichen (24) in einer Parkplatzfläche (22), bei welchem
ein Kamerasystem (12) zum Liefern von Abbildindizien von innerhalb der Parkplatzfläche (22) verwendet wird und eine Erkennungseinheit (14) in Abhängigkeit der Abbildindizien den Parkplatzbereichen (24) je einen Belegungsstatus zuordnet, der kennzeichnet, ob ein jeweiliger Parkplatzbereich (24) frei oder besetzt ist,
wobei die Abbildindizien für zumindest einen jeweiligen Parkplatzbereich (24) dann als eine erste Momentaufnahme (28) gespeichert werden, wenn sich der Belegungsstatus des jeweiligen Parkplatzbereichs von frei auf besetzt ändert und zusätzlich dann als eine zweite Momentaufnahme (30) gespeichert werden, wenn eine Randbedingung erfüllt ist,
**dadurch gekennzeichnet, dass**
die Randbedingung eine maximale Parkdauer umfasst,
wobei nach dem Eintreten der Randbedingung die erste Momentaufnahme (28) sowie die zweite Momentaufnahme (30) auf einem Anzeigegerät (18) dargestellt werden, und
wobei das Anzeigegerät (18) oder die Erkennungseinheit (14) mittels eines Bildvergleichs einen Vergleichswert berechnet, welcher von dem Anzeigegerät (14) angegeben wird, wobei das Anzeigegerät (14) weitere Informationen betreffend den jeweiligen Parkplatzbereich (24), nämlich eine Ankunftszeit, eine Parkdauer oder eine Karte, in welcher der jeweilige Parkplatzbereich (24) markiert ist, wiedergibt und wobei der Vergleichswert angibt, wie stark sich die Positionen eines Fahrzeugs in den Momentaufnahmen (28, 30) ähneln.

## Claims

1. A parking space monitoring system (10) for detecting free and occupied parking space areas (24) in a parking space zone (22), said parking space monitoring system (10) comprising
a recognition unit (14) and a camera system (12), wherein the camera system (12) is configured for delivering image indications from within the parking space zone (22) and the recognition unit (14) is configured to associate a respective occupation status, which designates whether a respective parking space area (24) is free or occupied, with the parking space areas (24) in dependence on the image indications,
wherein the recognition unit (14) is further configured to store the image indications for at least one respective parking space area (24) as a first snapshot (28) when the occupation status of the respective parking space area (24) changes from free to occupied and additionally to store it as a second snapshot (30) when a condition is satisfied,
**characterized in that**
the condition comprises a maximum parking time,
wherein the parking space monitoring system (10) is configured to display the first snapshot (28) and the second snapshot (30) on a display unit (18) after the occurrence of the condition,
and
wherein the display unit (18) is configured to reproduce further information relating to the respective parking space area (24), namely a time of arrival, a time of stay or a map (34) on which the respective parking space area (24) is marked, and the parking space monitoring system is configured to indicate a comparison value on the display device, said comparison value being obtained by means of an image comparison by a calculation by the display unit (18) or the recognition unit (14) and indicating how much the positions of the vehicle in the snapshots (28, 30) resemble one another.

2. A parking space monitoring system (10) in accordance with claim 1,
**characterized in that**
the snapshots (28, 30) substantially only relate to the respective parking space area (24).

3. A parking space monitoring system (10) in accordance with claim 1 or claim 2,
**characterized in that**
the recognition unit (14) is configured only to output the snapshots (28, 30) on the occurrence of the condition, in particular to a display unit (18).

4. A parking space monitoring system (10) in accordance with at least one of the preceding claims,
**characterized in that**
the recognition unit (14) is configured to delete the snapshots (28, 30) when the occupation status of a respective parking space area (24) changes from occupied to free prior to the occurrence of the condition.

5. A parking space monitoring system (10) in accordance with at least one of the preceding claims,
**characterized in that**
the snapshots (28, 30) are only stored in the recognition unit (14) prior to the occurrence of the condition.

6. A parking space monitoring system (10) in accordance with any one of the claims 1 to 4,
**characterized in that**
the recognition unit (14) is configured to output at least the first snapshot (28) prior to the occurrence of the condition and to provide it for the carrying out of a payment procedure.

7. A parking space monitoring system (10) in accordance with at least one of the preceding claims,
**characterized by**
a license plate recognition unit which serves to detect the license plates of vehicles (26) which use the parking space areas (24) and in particular to associate the respective license plate of the vehicle (26) with a respective parking space area (24) on which the vehicle (26) is parked.

8. A parking space monitoring system (10) in accordance with at least one of the preceding claims,
**characterized in that**
the conditions for at least some of the parking space areas (24) differ.

9. A parking space monitoring system (10) in accordance with at least one of the preceding claims,
**characterized by**
a transmission unit (16) and a mobile display unit (18), with the recognition unit (14) furthermore being configured
- to store the geographical coordinates of parking space areas (24) located in the field of view of the camera system (12);
- to provide the respective occupation status of at least the free parking space areas (24) with the associated geographical coordinates to the transmission unit (16),
wherein the transmission unit (16) is configured to transmit the respective occupation status of at least the free parking space areas (24) with the associated geographical coordinates to the mobile display unit (18).

10. A parking space monitoring system (10) in accordance with at least one of the preceding claims,
**characterized in that**
the recognition unit (14) is configured to take further snapshots of the respective parking space area (24), in particular at predetermined time intervals, after the occurrence of the condition.

11. A parking space monitoring system (10) in accordance with claim 10,
**characterized in that**
the first snapshot (28) and the second snapshot (30) and at least one of the further snapshots are displayed, in particular next to one another, on a display unit (18) after the occurrence of the condition.

12. A parking space monitoring system (10) in accordance with at least one of the preceding claims,
**characterized in that**
the snapshots (28, 30) each comprise edge images or contour images.

13. A method of detecting free and occupied parking space areas (24) in a parking space zone (22), in which
a camera system (12) is used for delivering image indications from within the parking space zone (22) and a recognition unit (14) associates a respective occupation status, which designates whether a respective parking space area (24) is free or occupied, with the parking space areas (24) in dependence on the image indications,
wherein the image indications for at least one respective parking space area (24) are stored as a first snapshot (28) when the occupation status of the respective parking space area changes from free to occupied and are additionally stored as a second snapshot (30) when a condition is satisfied,
**characterized in that**
the condition comprises a maximum parking time,
wherein the first snapshot (28) and the second snapshot (30) are displayed on a display unit (18) after the occurrence of the condition, and
wherein the display unit (18) or the recognition unit (14) calculates a comparison value by means of an image comparison, said comparison value being displayed on the display device (14), wherein the display unit (18) reproduces further information relating to the respective parking space area (24), namely a time of arrival, a time of stay or a map (34) on which the respective parking space area (24) is marked, and wherein the comparison value indicates how much the positions of the vehicle in the snapshots (28, 30) resemble one another.

## Revendications

1. Système de surveillance de parking (10) pour la détection de zones de parking (24) libres et occupées dans une aire de stationnement (22), comportant
une unité de reconnaissance (14) et un système de caméra (12), le système de caméra (12) étant réalisé pour fournir des indices d'image de l'intérieur de l'aire de stationnement (22), et l'unité de reconnaissance (14) étant réalisée pour attribuer à chacune des zones de parking (24), en fonction des indices d'image, un état d'occupation qui caractérise si une zone de parking (24) respective est libre ou occupée,
dans lequel
l'unité de reconnaissance (14) est en outre réalisée pour mémoriser les indices d'image pour au moins une zone de parking (24) respective en tant que premier instantané (28) lorsque l'état d'occupation de la zone de parking (24) respective passe de libre à occupé, et pour les mémoriser en supplément en tant que deuxième instantané (30) lorsqu'une condition limite est satisfaite,
**caractérisé en ce que**
la condition limite comprend une durée maximale de stationnement,
le système de surveillance de parking (10) est réalisé pour représenter, après l'apparition de la condition limite, le premier instantané (28) ainsi que le deuxième instantané (30) sur un appareil d'affichage (18), et
l'appareil d'affichage (18) est réalisé pour reproduire d'autres informations relatives à la zone de parking (24) respective, à savoir une heure d'arrivée, une durée de stationnement ou une carte dans laquelle la zone de parking (24) respective est marquée, et
le système de surveillance de parking est réalisé pour indiquer sur l'appareil d'affichage une valeur de comparaison obtenue de l'appareil d'affichage (1) ou de l'unité de reconnaissance (14) au moyen d'une comparaison d'images par calcul, ladite valeur indiquant dans quelle mesure les positions d'un véhicule dans les instantanés (28, 30) se ressemblent.

2. Système de surveillance de parking (10) selon la revendication 1,
**caractérisé en ce que**
les instantanés (28, 30) ne concernent sensiblement que la zone de parking (24) respective.

3. Système de surveillance de parking (10) selon la revendication 1 ou 2,
**caractérisé en ce que**
l'unité de reconnaissance (14) est réalisée pour ne délivrer les instantanés (28, 30) que lors de l'apparition de la condition limite, en particulier à un appareil d'affichage (18).

4. Système de surveillance de parking (10) selon l'une au moins des revendications précédentes,
**caractérisé en ce que**
l'unité de reconnaissance (14) est réalisée pour effacer les instantanés (28, 30) lorsque l'état d'occupation d'une zone de parking (24) respective passe d'occupé à libre avant l'apparition de la condition limite.

5. Système de surveillance de parking (10) selon l'une au moins des revendications précédentes,
**caractérisé en ce que**
avant l'apparition de la condition limite, les instantanés (28, 30) sont mémorisés exclusivement dans l'unité de reconnaissance (14).

6. Système de surveillance de parking (10) selon l'une des revendications 1 à 4,
**caractérisé en ce que**
l'unité de reconnaissance (14) est réalisée pour délivrer au moins le premier instantané (28) avant l'apparition de la condition limite et pour le mettre à disposition pour l'exécution d'une opération de paiement.

7. Système de surveillance de parking (10) selon l'une au moins des revendications précédentes,
**caractérisé par**
une unité de reconnaissance des plaques d'immatriculation qui sert à détecter les plaques d'immatriculation des véhicules (26) qui utilisent les zones de parking (24), et en particulier à attribuer la plaque d'immatriculation respective du véhicule (26) à une zone de parking (24) respective sur laquelle le véhicule (26) est garé.

8. Système de surveillance de parking (10) selon l'une au moins des revendications précédentes,
**caractérisé en ce que**
les conditions limites sont différentes pour une partie au moins des zones de parking (24).

9. Système de surveillance de parking (10) selon l'une au moins des revendications précédentes,
**caractérisé par**
une unité d'émission (16) et un dispositif d'affichage mobile (18), l'unité de reconnaissance (14) étant en outre réalisée pour
- mémoriser les coordonnées géographiques de zones de parking (24) se trouvant dans le champ de vision du système de caméra (12),
- mettre à disposition de l'unité d'émission (16) l'état d'occupation respectif d'au moins les zones de parking (24) libres avec les coordonnées géographiques correspondantes,
l'unité d'émission (16) étant réalisée pour envoyer à l'appareil d'affichage mobile (18) l'état d'occupation respectif d'au moins les zones de parking (24) libres avec les coordonnées géographiques correspondantes.

10. Système de surveillance de parking (10) selon l'une au moins des revendications précédentes,
**caractérisé en ce que**
l'unité de reconnaissance (14) est réalisée pour prendre d'autres instantanés de la zone de parking (24) respective après l'apparition de la condition limite, en particulier à des intervalles de temps prédéfinis.

11. Système de surveillance de parking (10) selon la revendication 10,
**caractérisé en ce que**
après l'apparition de la condition limite, le premier instantané (28) ainsi que le deuxième instantané (30) et/ou au moins l'un des autres instantanés sont représentés sur un appareil d'affichage (18), en particulier les uns à côté des autres.

12. Système de surveillance de parking (10) selon l'une au moins des revendications précédents,
**caractérisé en ce que**
les instantanés (28, 30) comprennent chacun des images de bords ou de contours.

13. Procédé de détection de zones de parking (24) libres et occupées dans une aire de stationnement (22), dans lequel
un système de caméra (12) est utilisé pour fournir des indices d'image de l'intérieur de l'aire de stationnement (22), et une unité de reconnaissance (14) attribue à chacune des zones de parking (24), en fonction des indices d'image, un état d'occupation respectif qui caractérise si une zone de parking (24) respective est libre ou occupée,
les indices d'image pour au moins une zone de parking respective (24) sont mémorisés en tant que premier instantané (28) lorsque l'état d'occupation de la zone de parking respective passe de libre à occupé, et sont mémorisés en supplément en tant que deuxième instantané (30) lorsqu'une condition limite est satisfaite,
**caractérisé en ce que**
la condition limite comprend une durée maximale de stationnement,
après l'apparition de la condition limite, le premier instantané (28) ainsi que le deuxième instantané (30) sont représentés sur un appareil d'affichage (18), et
au moyen d'une comparaison d'images, l'appareil d'affichage (18) ou l'unité de reconnaissance (14) calcule une valeur de comparaison qui est indiquée par l'appareil d'affichage (14),
l'appareil d'affichage (14) reproduit d'autres informations relatives à la zone de parking (24) respective, à savoir une heure d'arrivée, une durée de stationnement ou une carte dans laquelle la zone de parking (24) respective est marquée, et la valeur de comparaison indique dans quelle mesure les positions d'un véhicule dans les instantanés (28, 30) se ressemblent.
